# FASCICULE DE BREVET EUROPEEN

(11) **EP 1 806 257 B1**
(45) Date de publication et mention de la délivrance du brevet: **31.12.2008**
(21) Numéro de dépôt: 07290027.7
(22) Date de dépôt: 09.01.2007
(51) Int. Cl.: B60N 2/48

(54) **Appui-tête comprenant une partie d'appui souple par rapport à une partie annexe formant au moins appui cervical**
Kopfstütze, die einen Stützteil umfasst, der gegenüber einem Anbauteil flexibel ist, das zumindest eine Nackenstütze bildet
Headrest comprising a flexible resting part in relation to an additional part forming at least a cervical rest

(30) Priorité: 09.01.2006 FR 0600208
(43) Date de publication de la demande: 11.07.2007
(73) Titulaire: Centre d'Etude et de Recherche pour l'Automobile (CERA), 51100 Reims (FR)
(72) Inventeur: Bieven, Frank, 75015 Paris (FR)
(74) Mandataire: Sayettat, Julien Christian

(56) Documents cités:
- DE-A1- 3 023 140
- DE-A1- 3 928 884
- DE-A1- 4 110 953

## Description

L'invention concerne un appui-tête de siège de véhicule automobile.

On connaît, notamment du document EP 1 580 067, un appui-tête de siège de véhicule automobile comprenant un coussin d'appui, ledit coussin d'appui comprenant une partie d'appui-tête et une partie annexe, contiguë au moins au bord inférieur de ladite partie d'appui-tête, ladite partie annexe étant mobile en rotation par rapport à ladite partie d'appui-tête de sorte à pouvoir être disposée en saillie par rapport à ladite partie d'appui-tête et à former au moins appui cervical.

Selon une réalisation proposée dans le même document, la partie annexe est en outre contiguë aux bords latéraux de la partie d'appui-tête en présentant sensiblement une forme de U, dont les extrémités des branches sont articulées en partie supérieure de l'appui-tête, la partie centrale du U formant appui cervical et ses branches formant appui latéral de la tête lorsque ladite partie annexe est disposée en saillie.

Un tel appui-tête, notamment du fait qu'il comprend deux parties articulées l'une par rapport à l'autre, présente une complexité de réalisation importante. En outre, toujours du fait de sa réalisation en deux parties, il peut présenter une esthétique et un confort désavantageux lorsque la partie annexe est en saillie, ceci du fait de la création d'arêtes vives.

L'invention a pour but de proposer un appui-tête de réalisation simplifiée permettant d'apporter une fonction d'appui cervical, et le cas échéant d'appui latéral de la tête, ledit appui-tête présentant en outre une esthétique et un confort avantageux.

A cet effet, l'invention propose un appui-tête de siège de véhicule automobile comprenant un coussin d'appui, ledit coussin d'appui comprenant une partie d'appui-tête et une partie annexe, contiguë au moins au bord inférieur de ladite partie d'appui-tête, les surfaces avant desdites parties d'appui-tête et annexe étant situées à l'état libre sensiblement dans le prolongement l'une de l'autre, ladite partie d'appui-tête présentant une souplesse supérieure à celle de ladite partie annexe de sorte que ladite partie d'appui-tête s'enfonce, par appui de la tête de l'utilisateur, sur une profondeur suffisante pour que ladite partie annexe soit en saillie par rapport à ladite partie d'appui-tête de sorte à former au moins appui cervical.

De la sorte, la réalisation de l'appui-tête est simplifiée du fait de la suppression de la rotation relative entre les parties d'appui-tête et annexe. Un tel appui-tête permet en outre d'apporter une fonction d'appui cervical, et le cas échéant, on le verra plus loin, d'appui latéral de la tête. Par ailleurs, ledit appui-tête présente une esthétique et un confort avantageux liés à la suppression d'arête vive entre les surfaces avant des parties d'appui-tête et annexe lorsque ladite partie annexe est saillante.

Dans cette description, les termes de positionnement dans l'espace (avant, arrière, central, latéral, supérieur, inférieur,...) sont pris en référence à un appui-tête monté sur le siège du véhicule.

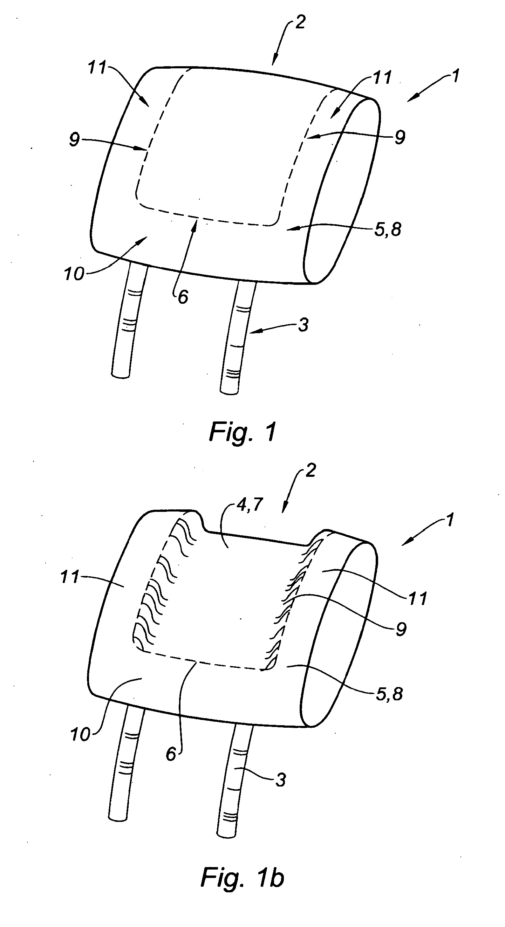

D'autres particularités et avantages de l'invention apparaîtront dans la description qui suit, faite en référence aux figures jointes qui sont une représentation schématique en perspective d'un appui-tête selon un mode de réalisation de l'invention, l'appui-tête étant respectivement en configuration libre de non utilisation (figure 1a) et en configuration d'utilisation (figure 1b), lorsque la tête d'un passager repose dessus.

En référence aux figures, on décrit à présent un appui-tête 1 de siège de véhicule automobile comprenant un coussin d'appui 2, monté sur une armature 3, ledit coussin d'appui comprenant une partie d'appui-tête 4 et une partie annexe 5, contiguë au moins au bord inférieur 6 de ladite partie d'appui-tête, les surfaces avant 7,8 desdites parties d'appui-tête et annexe étant situées à l'état libre sensiblement dans le prolongement l'une de l'autre, ladite partie d'appui-tête présentant une souplesse supérieure à celle de ladite partie annexe de sorte que ladite partie d'appui-tête s'enfonce, par appui de la tête de l'utilisateur, sur une profondeur suffisante pour que ladite partie annexe soit en saillie par rapport à ladite partie d'appui-tête de sorte à former au moins appui cervical.

Selon la réalisation représentée, la partie annexe 5 est en outre contiguë aux bords latéraux 9 de la partie d'appui-tête 4 en présentant sensiblement une forme de U dont la partie centrale 10 forme appui cervical et dont les branches 11 forment appui latéral de la tête lorsque ladite partie d'appui-tête est enfoncée.

Selon une réalisation, le coussin d'appui 2 comprend une coiffe de revêtement souple, par exemple à base de textile, revêtant un bloc de mousse souple, par exemple à base de polyuréthanne, ledit bloc comprenant une première zone, disposée en arrière de la surface avant d'appui-tête 7, et une deuxième zone disposée en arrière de la surface avant annexe 8, ladite première zone présentant une souplesse supérieure à celle de ladite deuxième zone.

Les surfaces avant des parties d'appui-tête 7 et annexe 8 étant situées à l'état libre sensiblement dans le prolongement l'une de l'autre, on obtient une esthétique avantageuse de l'appui-tête 1 lorsqu'il n'est pas utilisé, la frontière entre les deux zones pouvant être rendue invisible.

Selon une réalisation, la première zone est surmoulée par la deuxième zone, ce qui permet d'assurer une parfaite cohésion entre les deux. Un procédé de réalisation, non limitatif, d'un appui-tête 1 présentant cette caractéristique est divulgué par exemple dans le document FR 2 862 578.

## Revendications

1. Appui-tête (1) de siège de véhicule automobile comprenant un coussin d'appui (2), ledit coussin d'appui comprenant une partie d'appui-tête (4) et une partie annexe (5), contiguë au moins au bord inférieur (6) de ladite partie d'appui-tête, les surfaces avant (7,8) desdites parties d'appui-tête et annexe étant situées à l'état libre sensiblement dans le prolongement l'une de l'autre, ledit appui-tête étant **caractérisé en ce que** ladite partie d'appui-tête présente une souplesse supérieure à celle de ladite partie annexe de sorte que ladite partie d'appui-tête s'enfonce, par appui de la tête de l'utilisateur, sur une profondeur suffisante pour que ladite partie annexe soit en saillie par rapport à ladite partie d'appui-tête de sorte à former au moins appui cervical.

2. Appui-tête selon la revendication 1, **caractérisé en ce que** la partie annexe est en outre contiguë aux bords latéraux (9) de la partie d'appui-tête en présentant sensiblement une forme de U dont la partie centrale (10) forme appui cervical et dont les branches (11) forment appui latéral de la tête lorsque ladite partie d'appui-tête est enfoncée.

3. Appui-tête selon la revendication 1 ou 2, **caractérisé en ce que** le coussin d'appui (4) comprend une coiffe de revêtement souple revêtant un bloc de mousse souple, ledit bloc comprenant une première zone, disposée en arrière de la surface avant d'appui-tête (7), et une deuxième zone disposée en arrière de la surface avant annexe (8), ladite première zone présentant une souplesse supérieure à celle de ladite deuxième zone.

4. Appui-tête selon la revendication 3, **caractérisé en ce que** la première zone est surmoulée par la deuxième zone.

## Claims

1. Headrest (1) for motor vehicle seat comprising a support cushion (2), said support cushion comprising a head rest portion (4) and an annex portion (5), contiguous to at least the lower edge (6) of said headrest portion, the front surfaces (7,8) of said headrest and annex portions being located at a substantially free state in the extension in relation to one another, said headrest being **characterised in that** said headrest portion has flexibility that is superior to that of said annex portion in such a way that said headrest portion sinks in, through the pressing of the head of the user, to a depth that is sufficient for said annex portion to be protruding in relation to said headrest portion in such a way as to form at least a cervical support.

2. Head rest set forth in claim 1, **characterised in that** the annex portion is furthermore contiguous to the lateral edges (9) of the headrest portion having a substantially U shape of which the central portion (10) forms a cervical support and of which the branches (11) form a lateral support of the head when said headrest portion is sunken into.

3. Headrest set forth in claim 1 or 2, **characterised in that** the support cushion (4) comprises a cradle with flexible cover covering a block of flexible foam, said block comprising a first zone, arranged behind the front surface of the headrest (7), and a second zone arranged behind the surface before annex (8), said first zone having a flexibility that is superior to that of said second zone.

4. Headrest set forth in claim 3, **characterised in that** the first zone is over moulded by the second zone.

## Patentansprüche

1. Kopfstütze (1) eines Kraftfahrzeugsitzes, umfassend ein Stützkissen (2), wobei das Stützkissen einen Kopfstützteil (4) und einen Nebenteil (5) umfasst, der zumindest an den unteren Rand (6) des Kopfstützteils angrenzt, wobei sich die Vorderflächen (7, 8) des Kopfstützteils und des Nebenteils im freien Zustand im Wesentlichen in gegenseitiger Verlängerung befinden, wobei die Kopfstütze **dadurch gekennzeichnet ist, dass** der Kopfstützteil eine Weichheit aufweist, die größer ist als jene des Nebenteils, sodass der Kopfstützteil durch Aufstützen des Kopfes des Anwenders in eine Tiefe hineingedrückt wird, die ausreichend ist, um den Nebenteil in Bezug auf den Kopfstützteil vorspringen zu lassen, sodass er zumindest eine Nackenstütze bildet.

2. Kopfstütze nach Anspruch 1, **dadurch gekennzeichnet, dass** der Nebenteil des Weiteren an die Seitenränder (9) des Kopfstützteils angrenzt, indem er im Wesentlichen eine U-Form aufweist, deren Mittelteil (10) eine Nackenstütze bildet und deren Schenkel (11) seitliche Stützen für den Kopf bilden, wenn der Kopfstützteil hineingedrückt ist.

3. Kopfstütze nach Anspruch 1 oder 2, **dadurch gekennzeichnet, dass** das Stützkissen (4) eine Abdeckung aus weichem Überzug umfasst, der einen weichen Schaumstoffblock überzieht, wobei der Block einen ersten Bereich, der hinter der Kopfstützvorderfläche (7) angeordnet ist, und einen zweiten Bereich umfasst, der hinter der Nebenvorderfläche (8) angeordnet ist, wobei der erste Bereich eine Weichheit aufweist, die größer ist als jene des zweiten Bereichs.

4. Kopfstütze nach Anspruch 3, **dadurch gekennzeichnet, dass** der erste Bereich vom zweiten Bereich umformt wird.
